# EUROPEAN PATENT APPLICATION

(11) **EP 3 181 473 A1**
(43) Date of publication of application: **21.06.2017**
(21) Application number: 15831976.4
(22) Date of filing: 10.08.2015
(51) Int. Cl.: B65D 41/26, B65D 1/02

(54) **CAP-INTEGRATED TUBE CONTAINER AND PRODUCTION DEVICE THEREFOR AND PRODUCTION METHOD THEREFOR**

(30) Priority: 14.08.2014 KR 20140105716; 14.08.2014 KR 20140105723; 29.08.2014 KR 20140113749
(71) Applicant: Lee, Dong Hoon, Seoul 135-804 (KR); Eo, Yoon Joon, Seoul 150-044 (KR)
(72) Inventor: Lee, Dong Hoon, Seoul 135-804 (KR); Eo, Yoon Joon, Seoul 150-044 (KR)
(74) Representative: Zardi, Marco
(86) International application number: PCT/KR2015/008367
(87) International publication number: WO 2016/024779

(57) **Abstract**

The present invention relates to a production device of a cap-integrated tube container, and provides a tube container production device comprising: a first blocking part which is positioned outside a coil, that generates high frequencies, so as to block high frequencies generated from the coil; a second blocking part which is positioned above the first blocking part so as to block high frequencies generated from the coil; and a third blocking part which is positioned inside the coil so as to block high frequencies generated from the coil, and on the inside of which is formed a space for positioning a cap that is mounted on a tube container.

## Description

### [Technical Field]

The present invention relates to a cap-integrated tube container, a production device therefor, and a production method therefor, and more particularly, to a cap-integrated tube container, a production device therefor, and a production method therefor which can be integrally produced by bonding a cap part including a cap and a tube at the time of producing the tube container.

### [Background Art]

In general, toothpaste, cosmetics, and the like are used by filling the contents in a tube container, and the tube container is used by bonding a tube molded in a cylindrical or elliptical shape and a cap connection means separately injection-molded to produce a container main body and separately producing a cap fastened to the connection means to be coupled with the container main body. Accordingly, in order to produce one tube container, the tube, the cap connection means, and the cap need to be separately produced and then used through a bonding process or combining. As such, when the tube container is produced, there are problems in that production costs are high and in many cases, the cap is lost while the tube container is used.

### [Disclosure]

### [Technical Problem]

An object of the present invention is to provide a cap-integrated tube container constituted by bonding a cap and a tube by using high-frequency electric energy, a production device therefor, and a production method therefor.

Further, another object of the present invention is to provide a cap-integrated tube container that newly configures a material of a cap part including a cap or a tube, a production device therefor, and a production method therefor.

### [Technical Solution]

An aspect of the present invention provide a tube container production device including: a first blocking part which is positioned outside a coil, that generates high frequencies, so as to block high frequencies generated from the coil; a second blocking part which is positioned above the first blocking part so as to block high frequencies generated from the coil; and a third blocking part which is positioned inside the coil so as to block high frequencies generated from the coil, and on the inside of which is formed a space for positioning a cap that is mounted on a tube container.

In this case, the first to third blocking parts may be made of ferrite.

Further, the tube container production device may further include a fixing part for passing through the second blocking part and fixing the cap by contacting the lower surface on the upper surface of the cap positioned at the third blocking part.

Further, the lower end of the fixing part may be made of a non-metallic material.

Further, the tube container production device may further include a tube container frame including a neck portion having the same radiuses of the top and the bottom; a shoulder portion of which a radius of the bottom is larger than a radius of the top and the top is connected to the bottom of the neck portion; and a body portion of which the top is connected with the bottom of the shoulder portion, in which the tube container frame may include at least one fixing groove for fixing the cap from the lower surface of the shoulder portion to the inner portion.

In this case, the tube container frame may include at least one air inlet at the inside to be traversed from the top to the bottom.

Another aspect of the present invention provides a tube container including: a cap; a hinge of which the top is connected to the bottom of the cap; a neck portion of which the top is connected to the bottom of the hinge; a shoulder portion of which the top is connected to the bottom of the neck portion; and at least one fixing projection projecting downward from the side of the shoulder portion.

Herein, the top of the cap may be the same size as the bottom, the top of the neck portion may be the same size as the bottom, and the bottom of the shoulder portion may be larger than the bottom.

Further, the tube container may further include a body portion of which the top is connected to the bottom of the shoulder portion, in which the fixing projection may be positioned in the body portion.

The tube container may further include a discharge part of which the bottom is connected to the top of the neck portion, the outside of the top protrudes, and the sealing member is coupled between the outside and the inside of the upper surface so that the outside of the sealing member is positioned.

Yet another aspect of the present invention provides a tube container production method, including: mixing polyethylene and polypropylene polymerized by using either a metallocene catalyst or a ziegler-natta catalyst; heating the mixture; generating a cap part by using the mixture melted by heating; and bonding the cap part and the body portion.

Herein, the mixing may include adding aluminum and the aluminum may be added with 25 to 35 wt%.

Further, whether the aluminum is added may be determined according to whether the aluminum is contained in the body portion.

Further, the mixing may include mixing 20 to 45 wt% of the metallocene polyethylene and 54 to 79 wt% of the polypropylene.

Further, the heating may include heating by a plurality of heating parts.

Further, in the plurality of heating parts, the temperature may be increased from the heating part where the mixture is first heated to the heating part where the mixture is finally heated.

Further, the heating may include injecting at an injection speed of 55 to 60 rpm, and the bonding may include heating and bonding aluminum contained in at least one of the cap part and the body portion by using high frequency electric energy.

### [Advantageous Effects]

According to the present invention, since the tube container is produced by bonding the cap part to the tube, production costs of the tube container are reduced, a production process is effective, and productivity is improved.

Further, since the cap is integrally bonded to the tube container, there is no risk of losing the cap during use and the cap position is constant and thus it is possible to provide convenience in use.

Further, since the cap part is made of polyethylene and polypropylene polymerized by using a metallocene catalyst or a Ziegler-Natta catalyst with an appropriate ratio, the bonding between the cap part and the body portion may be performed well.

Further, since either the cap part or the body portion contains aluminum, the bonding between the cap part and the body portion may be efficiently performed.

### [Description of Drawings]

FIG. 1 is a perspective view illustrating a tube container production device according to an exemplary embodiment of the present invention.
FIG. 2 is an exploded cross-sectional view illustrating a configuration of the tube container production device according to the exemplary embodiment of the present invention.
FIG. 3 is a cross-sectional view for describing an operation of the tube container production device for forming a tube container according to the exemplary embodiment of the present invention.
FIG. 4 is a cross-sectional view for describing an operation of the tube container production device that performs bonding according to the exemplary embodiment of the present invention.
FIG. 5 is a perspective view illustrating a tube container according to an exemplary embodiment of the present invention.
FIG. 6 is a cross-sectional view illustrating a configuration of the tube container according to the exemplary embodiment of the present invention.
FIG. 7 is a cross-sectional view illustrating a top configuration of the tube container according to the exemplary embodiment of the present invention.
FIG. 8 is a bottom view of the tube container according to the exemplary embodiment of the present invention.
FIG. 9 is a diagram for describing that a sealing member is coupled to a discharge portion of the tube container according to the exemplary embodiment of the present invention.
FIGS. 10A and 10B are flowcharts for describing a production method of a tube container according to an exemplary embodiment of the present invention.

### [Best Mode]

Hereinafter, exemplary embodiments of the present invention will be described in detail with reference to the accompanying drawings. Further, in the following description, a detailed explanation of known related technologies may be omitted to avoid unnecessarily obscuring the subject matter of the present invention.

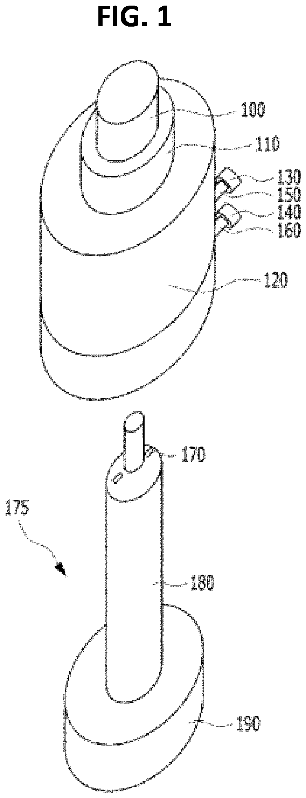

FIG. 1 is a perspective view illustrating a tube container production device 10 according to an exemplary embodiment of the present invention.

Referring to FIG. 1, the tube container production device 10 of the present invention includes a high frequency supply part 120, electrode parts 130 and 140, coolant supply parts 150 and 160, and a tube container frame 175 and may further include an operator 100, a connector 110, and a fixer 190.

The operator 110 is connected with the high frequency supply part 120 through the connector 110 and the high frequency supply part 120 may move.

The high frequency supply part 120 bonds the cap part and the tube of the tube container by using a high frequency generated by using power supplied through the electrode parts 130 and 140 when the tube container is produced, and the coolant supply parts 150 and 160 supply the coolant to the high frequency supply part 120 so as to reduce heat generated in a process in which the high frequency supply part 120 performs the bonding. For example, when the coolant is supplied through reference numeral 150, the coolant is discharged through reference numeral 160.

The tube container frame 175 is a place where the cap part and the tube are mounted and the top portion 170 is coupled to the cap part, and the body portion 180 is coupled to the tube and fixed by the fixer 190. Herein, the cap part includes a cap of the tube container, and the cap is disposed at the top and a fixing projection is disposed at the bottom, and the cap may be constituted by a one-touch cap.

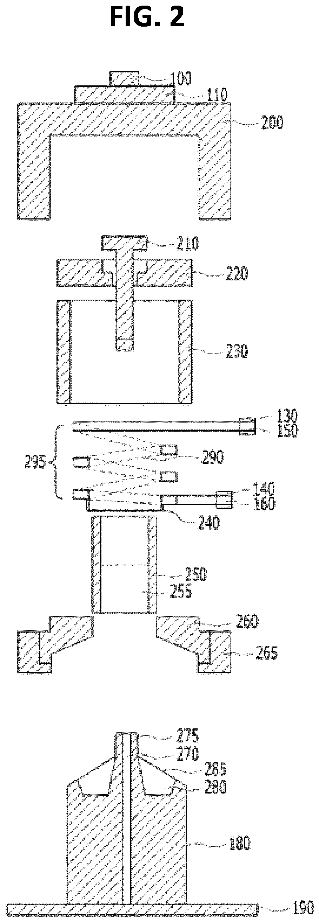

FIG. 2 is an exploded cross-sectional view illustrating a configuration of the tube container production device10 according to the exemplary embodiment of the present invention.

Referring to FIG. 2, the high frequency supply part 120 includes a housing 200, a cap closing part 210, first to third high frequency blocking parts 220, 230, and 250, and first and second high frequency transfer parts 260 and 265.

The housing 200 forms an appearance of the high frequency supply part 120 and the cap closing part 210 fixes the cap so that the cap is not opened when the cap part and the tube are bonded. The cap closing part 210 is mounted by passing through a ferrite plate 220 and the top of the cap closing part 210 is connected to the housing 200 and the bottom is positioned in a space of a ferrite inner pipe 250 where the cap is positioned. A part including the lower surface of the bottom of the cap closing part 210 protects the damage of the cap and may be made of a non-metallic material so as to prevent the high frequency from being transferred, and for example, may be made of a rubber material, natural leather, or the like.

A coil part 295 includes a coil 290 and a high frequency output part 240, and the coil 290 generates a high frequency when the power is supplied through the electrode parts 130 and 140 connected to one end and the other end of the coil 290, and the generated high frequency is emitted through the high frequency output part 240.

The first to third high frequency blocking parts 220, 230, and 250 block the high frequency from being emitted to a place without requiring the high frequency such as an outer portion of the high frequency supply part 120 when the high frequency is generated. The second high frequency blocking part 220, the first high frequency blocking part 230, and the third high frequency blocking part 250 may be constituted by a ferrite plate, a ferrite outer pipe, and a ferrite inner pipe, respectively. In this case, the coil 290 may be mounted by covering the outside of the third high frequency blocking part 250, the first high frequency blocking part 230 may be mounted by covering the outside of the coil 290, and the second high frequency blocking part 220 may be mounted on the top of the first high frequency blocking part 230. Further, a space 255 where the cap may be positioned when bonding the cap part and the tube may be formed in the third high frequency blocking part 250. In the case of being configured above, the high frequency generated in the coil 290 is blocked from being emitted to the inside of the third high frequency blocking part 250 and the outside of the first high frequency blocking part 230 to enhance high frequency efficiency.

The first high frequency transfer part 260 is made of a ceramic material and contacts the high frequency output part 240 and the second high frequency transfer part 265 is made of copper. Since the high frequency may not flow in the first high frequency transfer part 260 and the high frequency may flow in the second high frequency transfer part 265, the high frequency emitted from the high frequency output part 240 flows along the outer surface of the first high frequency transfer part 260 to be transferred to the second high frequency transfer part 265.

Meanwhile, the top portion 170 of the tube container frame 175 includes a neck portion 275 and a shoulder portion 285, and the sizes of the top and the bottom of the neck portion 275, but the bottom of the shoulder portion 285 is larger than the top thereof. Further, the bottom of the shoulder portion 285 is larger than the bottom of the neck portion 275 and the top of the shoulder portion 285 is connected to the bottom of the neck portion 275. In this case, the size may use a width, and for example, when the tube container frame 175 is formed in a cylindrical shape, radiuses of the top and the bottom of the neck portion 275 are the same as each other, but the radius of the bottom of the shoulder portion 285 is larger than the radius of the top thereof. Further, the radius of the bottom of the shoulder portion 285 is larger than the radius of the bottom of the neck portion 275.

A fixing groove 280 for fixing the cap part coupled with the tube container frame 175 is provided from the lower surface of the shoulder portion 285 to the inside of the tube container frame 175, and at least one fixing groove 280 may be provided. Further, the top of the body portion 180 is connected to the bottom of the shoulder portion 285, the tube container frame 175 has at least one air inlet 270 at the inside to be traversed from the top to the bottom. The cap part is fixed by suctioning the air after the cap part is coupled to the tube container frame 175 or the tube container is discharged from the tube container frame 175 after the bonding of the cap part and the tube is completed.

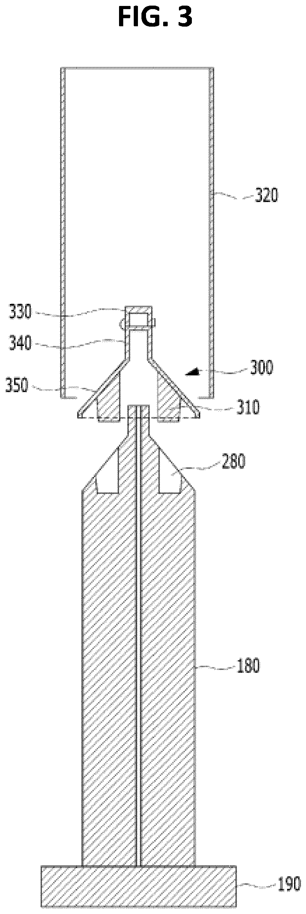

FIG. 3 is a cross-sectional view for describing an operation of the tube container production device 10 for forming the tube container according to the exemplary embodiment of the present invention.

A cap part 300 produced separately to produce the tube container is coupled to the top portion 170 of the tube container frame 175. In this case, the cap part 300 includes a neck portion 340 hinge-coupled with the cap, a shoulder portion 350 connected with the neck portion, and a fixing projection 310 formed downward from the shoulder portion 350. The fixing projection 310 is coupled to the fixing groove 280 formed on the top portion 170 of the tube container frame 175 and the cap part 300 is fixed to the tube container frame 175 by suctioning the air through an air passage 270. Thereafter, the tube 320 is coupled to the body portion 180 of the tube container frame 175, and a part of the top of the tube 320 coupled to the body portion 180 of the tube container frame 175 is overlapped with the shoulder portion 303 of the cap part 300 so that the cap part 300 and the tube 320 may be bonded to each other.

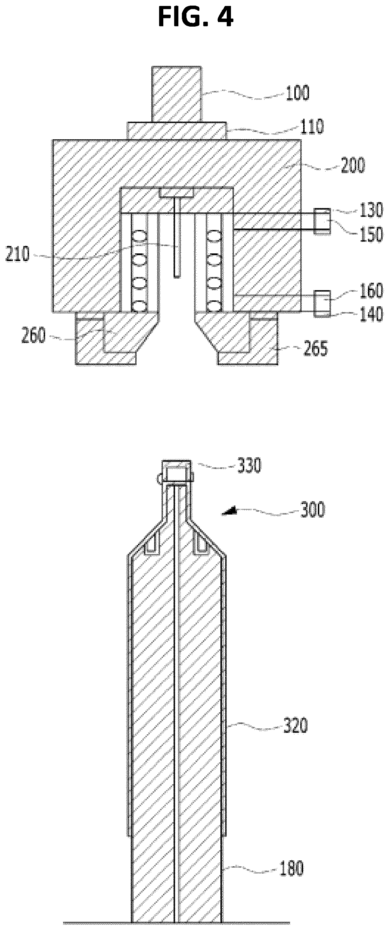

FIG. 4 is a cross-sectional view for describing an operation of the tube container production device 10 that performs bonding according to the exemplary embodiment of the present invention.

Referring to FIG. 4, when the cap part 300 and the tube 320 are mounted on the tube container frame 175, the operator 100 moves the high frequency supply part 120 in a tube container frame 175 direction and a cap 330 of the cap part 300 mounted on the tube container frame 175 is positioned in a space formed in the third high frequency blocking part 250 of the high frequency supply part 120, and the cap closing portion 210 contacts the cap 330. Thereafter, when the power is supplied to the electrode parts 130 and 140 and the coolant is supplied to the coolant supply parts 150 and 160, the high frequency generated from the coil 290 is discharged through the high frequency output part 240, and the discharged high frequency flows along the outer surface of the first high frequency transfer part 260 contacting the high frequency output part 240 to be transferred to the second high frequency transfer part 265. In this case, since a point where the first high frequency transfer part 260 and the second high frequency transfer part 265 are connected is a portion where the cap part 300 and the tube 320 are bonded, the cap part 300 and the tube 320 may be bonded by the high frequency.

For example, in the case where the tube 320 is made of polyethylene and aluminum, when the high frequency flows in aluminum, heat is generated and as a result, polyethylene is fused to be bonded, and when the tube 320 is melted and compressed, the bonding is completed.

When the bonding is completed, the operator 100 moves so that a bonding part 2 is separated from the tube container frame 175 and the tube container is separated from the tube container frame 175 by injecting compressed air to a suction port of the tube container frame 175.

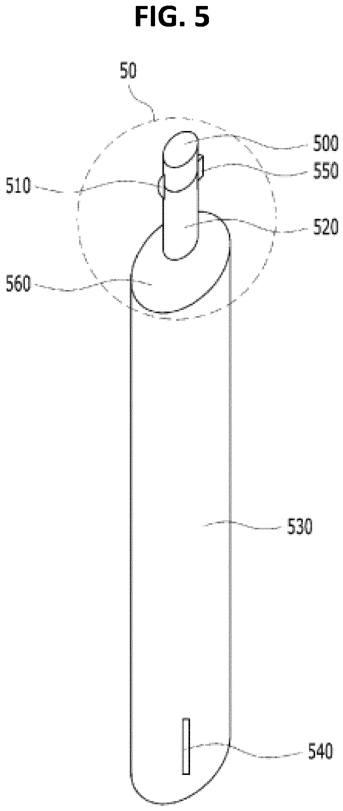

FIG. 5 is a perspective view illustrating a tube container according to an exemplary embodiment of the present invention.

Referring to FIG. 5, the tube container of the present invention includes a cap part 50 and a body portion 530 and the cap part 50 includes a cap 500, a hinge 510, a neck portion 520, and a shoulder portion 560.

In the cap part 50, the top of the hinge 510 is connected to the bottom of the cap 500 and the bottom of the hinge 510 is connected to the top of the neck portion 520. Further, the bottom of the neck portion 520 is connected to the top of the shoulder portion 560 and the bottom of the shoulder portion 560 is connected to the top of the body portion 530.

The cap part 50 may be configured by using a metallocene catalyst or a ziegler-natta catalyst, polyethylene, polypropylene, and aluminum, and for example, the cap part 50 may use a mixed material of polyethylene, polypropylene and aluminum polymerized by using the metallocene catalyst or the ziegler-natta catalyst and polyethylene may use low density polyethylene (LDPE) or high density polyethylene (HDPE).

The metallocene catalyst may be designed and synthesized as a scientific catalyst and elaborately adjust a polymer structure. Accordingly, polyethylene (hereinafter, referred to as metallocene polyethylene) polymerized by using the metallocene catalyst has excellent thermal and structural characteristics such as transparency, strength, and elongation compared to polyethylene. Further, polyethylene polymerized by using the ziegler-natta catalyst has excellent thermal and structural characteristics such as transparency, strength, and elongation like the metallocene polyethylene. Hereinafter, the case using the metallocene catalyst is described, but polyethylene may be polymerized by using the ziegler-natta catalyst instead of the metallocene catalyst, and the method may be applied equally or similarly to the metallocene catalyst.

The metallocene polyethylene is not mixed with polypropylene well due to a low melt index (MI). The MI (g/min) is a weight/measuring time (50 min) of an extruded sample, and as the MI is increased, physical properties are weaker and processability is better, and the polypropylene is 3.5 to 4.0, the polyethylene is 0.75 to 0.85, and the metallocene polyethylene is 0.5 to 0.6. Accordingly, in order to compensate for low processability of the metallocene polyethylene and sufficiently express the physical properties, the metallocene polyethylene and the polypropylene need to be mixed and used at an appropriate ratio, and the tube container of the present invention is used by mixing 20 to 45 wt% of the metallocene polyethylene and 54 to 79 wt% of the polypropylene. When the metallocene polyethylene is less than 20 wt%, an effect of improving tensile strength and durability is not sufficiently exhibited, and when the metallocene polyethylene is more than 45 wt%, the MI is lowered and the processability is deteriorated, and thus a temperature overload phenomenon may occur in a tube container production device (not illustrated) during production.

Further, in order that the cap part 50 is easily bonded by using a high frequency when producing the tube container, 25 to 35 wt% of aluminum may be added to a mixture of metallocene polyethylene and polypropylene and added as an aluminum powder. In this case, whether aluminum is added may be determined according to whether aluminum is contained in the body portion 530, and for example, when aluminum is not contained in the body portion 530, aluminum is added to the cap part 50 and when aluminum is contained in the body portion 530, aluminum may not be added to the cap part 50. The reason is that when high frequency electric energy is supplied to aluminum, aluminum is heated and thus polyethylene may be melted, and when aluminum is contained in the body portion 530, polyethylene configuring the body portion 530 is melted to be bonded to the cap part 50 and when aluminum is not contained in the body portion 530, polyethylene contained in the cap part 50 is melted by adding aluminum to the cap part 50 to be bonded to the body portion 530.

Meanwhile, the body portion 530 is a place filled with a material and the material filled in the body portion 530 passes through the shoulder portion 560 and the neck portion 520 to be discharged through the opened cap 500. Further, an eye mark may be engraved on the bottom of the body portion 530 and an open projection 550 connected to the side of the cap 500 for opening the cap 500 may be configured to be positioned in a straight line with the eye mark 540.

The body portion 530 may be configured by using polyethylene and aluminum and for example, may be configured (an aluminum barrier layer) to position aluminum between polyethylene and polyethylene and may also be configured (a plastic barrier layer) by polyethylene without aluminum.

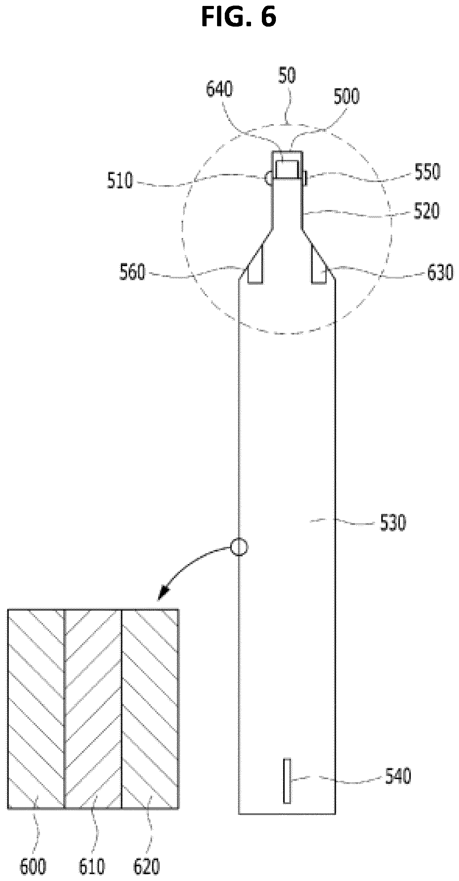

FIG. 6 is a cross-sectional view illustrating a configuration of the tube container according to the exemplary embodiment of the present invention.

Referring to FIG. 6, the cap 500 has the same sizes of the top and the bottom, and the bottom of the cap 500 is connected to the top of the neck portion 520. Further, the neck portion 520 has the same sizes of the top and the bottom, and the cap 500 and the neck portion 520 may have the same size. Further, the bottom of the discharge part 640 to which the material is discharged may be connected to the top of the neck portion 520 and the discharge part 640 may be made of the same material as the cap part 50 by the configuration of the cap part 50.

The bottom of the shoulder portion 560 is larger than the top, the top is connected with the bottom of the neck portion 520, and the bottom is larger than the bottom of the neck portion 520 and the bottom of the cap 500.

Herein, the size may use a width, and for example, when the tube container has a cylindrical shape, radiuses of the top and the bottom of the cap 500 are the same as each other and radiuses of the top and the bottom of the neck portion 520 are the same as each other. Further, in the shoulder portion 560, the radius of the bottom is larger than the radius of the top, and the radius of the bottom of the shoulder portion 560 is larger than the radiuses of the bottom of the cap 500 and the bottom of the neck portion 520. Further, the bottom of the cap 500 and the top of the neck portion 520 have the same radius and the radius of the bottom of the shoulder portion 560 may be about 5.5 times larger than the radius of the top thereof.

Meanwhile, a fixing projection 630 is provided downward from the side of the shoulder portion 560, and the fixing projection 630 is to fix the cap part 50 including the shoulder portion 560, the neck portion 520 and the cap 500 to the production device described above in the process of producing the tube container of the present invention. In the production device, a fixing groove 280 is provided and the fixing projection 630 is coupled to the fixing groove 280. At least one fixing projection 630 may be included, made of the same material as the cap part 50, and provided from the side of the shoulder portion 560 to the inside of the body portion 530.

The top of the body portion 530 is connected to the bottom of the shoulder portion 560 and the top of the body portion 530 and the bottom of the shoulder portion 560 may have the same size. Further, the body portion 530 may be configured by including aluminum 610, and when the aluminum 610 is included, as illustrated in FIG. 6, the aluminum 610 may be positioned between polyethylene 600 and polyethylene 620.

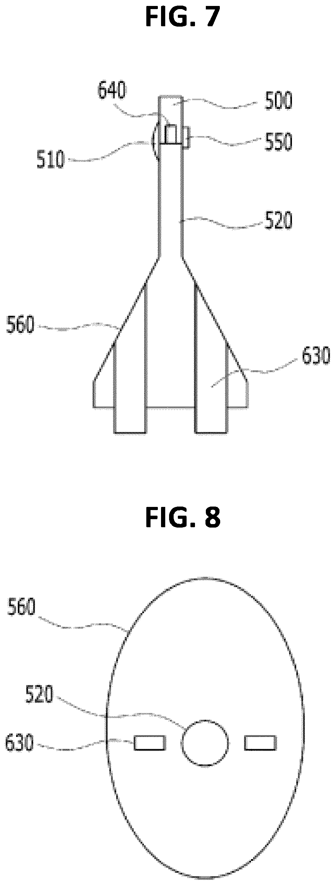

FIG. 7 is a cross-sectional view illustrating a top configuration of the tube container according to the exemplary embodiment of the present invention and FIG. 8 is a bottom view of the tube container according to the exemplary embodiment of the present invention.

Referring to FIGS. 7 and 8, it can be seen that the fixing projection 630 projects from the side of the shoulder portion 560 downward. In FIGS. 7 and 8, two fixing projections 630 are illustrated, but one or two or more fixing projections may be provided.

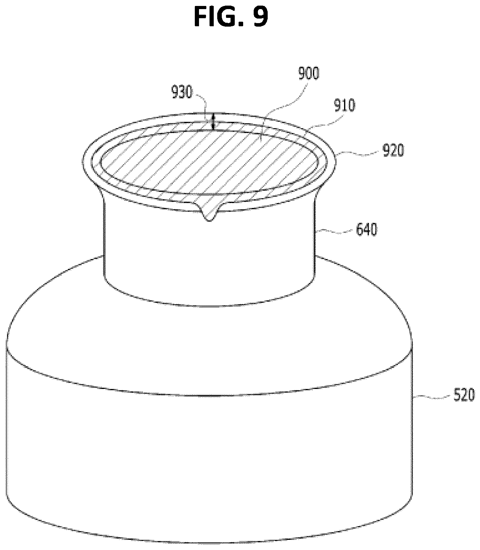

FIG. 9 is a diagram for describing that a sealing member is coupled to a discharge portion 640 of the tube container according to the exemplary embodiment of the present invention.

Referring to FIG. 9, the discharge part 640 of the tube container of the present invention discharges the material filled in the body portion 530 to the outside and is coupled with the cap 500, and an outside 920 of the top of the discharge part 640 protrudes so that the cap 500 may be opened and closed by an one-touch method.

Further, in the discharge part 640, in order to improve sealing force of an outlet 900, the sealing member 910 may be coupled by a thermosetting method and the like, and the user may discharge the material after removing the sealing member 910 coupled to the discharge part 640. In this case, the sealing member 910 is coupled so as not to deviate from the outside 820 of the upper surface of the discharge part 640 and the outside 820 of the sealing member 910 is coupled to be positioned in a range between the inner side and the outer side 820 of the upper surface of the discharge part 640. In this case, a part of the sealing member 910 may protrude to allow the user to easily remove the sealing member 910 from the discharge part 640 in the sealing member 910, and as illustrated in FIG. 9, a protruding part of the sealing member 910 may deviate from the outside 820 of the upper surface of the discharge part 640.

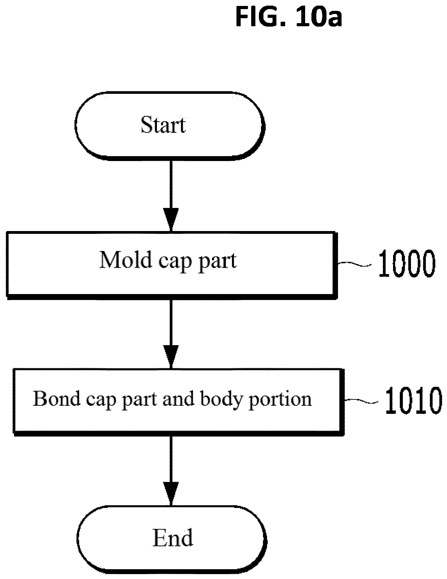

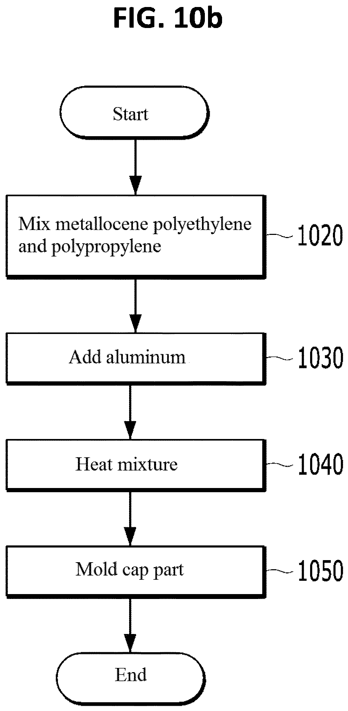

FIGS. 10A and 10B are flowcharts for describing a production method of a tube container according to an exemplary embodiment of the present invention.

Referring to FIG. 10A, a tube container production method of the present invention includes a process 1000 of molding the cap part 50 and a process 1010 of bonding the molded cap part 50 and the body portion 530.

First, referring to FIG. 10B, when describing the process of molding the cap part 50, 20 to 45 wt% of metallocene polyethylene and 54 to 79 wt% of polypropylene are mixed (1020) and the mixture is heated (1040). Thereafter, the cap part is generated by using the mixture (1050), and in this case, the metallocene polyethylene and the polypropylene are mixed and then 25 to 35 wt% of aluminum may be added (1030).

The heating process (1040) may be performed through a plurality of heating parts included in a production device (not illustrated) of producing the tube container of the present invention by an injection method. The reason is that when the temperature is too high, a carbonization phenomenon of the mixture occurs and the physical properties are lowered, and since the mixture is not dissolved well at a low temperature, increasing gradually the temperature is effective in dissolving the mixture having low processability. For example, the plurality of heating parts may be configured by a first heating part of 590 to 250°C, a second heating part of 595 to 255°C, a third heating part of 200 to 220°C, a fourth heating part of 205 to 225°C, a fifth heating part of 250 to 220°C, and a sixth heating part of 255 to 235°C so that low-MI metallocene polyethylene may be dissolved well.

Further, an injection speed in a production device (not illustrated) produced by an injection method of the present invention may be set to about 55 to 60 rpm. The reason is that the mixture is mixed well and dissolved well by increasing a residence time in the production device (not illustrated). When the injection speed is higher than 60 rpm, the mixture needs to be pushed by increasing the injection speed and thus a resin (in a state where the mixture is melted) becomes thick and a residence time in the production device (not illustrated) of the mixture is shortened, and when the injection speed is less than 55 rpm, the injection speed is decreased and a processing time is increased, and thus it is inefficient. Herein, the injection speed means a screw rpm and the screw is used for pushing the melted mixture at high pressure.

The process (1050) of generating the cap part includes a process of putting the heated and melted resin in a frame for generating the cap part 50 and processing the resin at high temperature.

Meanwhile, the bonding process (650) of the cap part 50 and the body portion 530 includes a process of bonding the molded cap part 50 and the body portion 530 by using high frequency electric energy. For example, in the tube container production device of the present invention described in FIGS. 1 to 4, after the cap part 50 and the body portion 530 are mounted on the tube container frame 175, and the when the high frequency electric energy is supplied, the shoulder portion 560 and the body portion 530 of the cap part 50 are bonded to each other to bond the cap part 50 and the body portion 530. In this case, when the body portion 530 or the cap part 50 are configured by including polyethylene and aluminum, aluminum is heated by high frequency electric energy and thus polyethylene is melted, and thus the cap part 50 and the body portion 530 may be bonded to each other.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A cap-integrated tube container production device, comprising:
a first blocking part which is positioned outside a coil, that generates high frequencies, so as to block high frequencies generated from the coil;
a second blocking part which is positioned above the first blocking part so as to block high frequencies generated from the coil; and
a third blocking part which is positioned inside the coil so as to block high frequencies generated from the coil, and on the inside of which is formed a space for positioning a cap that is mounted on a tube container.

2. The tube container production device of claim 1, wherein the first to third blocking parts are made of ferrite.

3. The tube container production device of claim 1, further comprising:
a fixing part for passing through the second blocking part and fixing the cap by contacting the lower surface on the upper surface of the cap positioned at the third blocking part.

4. The tube container production device of claim 3, wherein the lower end of the fixing part is made of a non-metallic material.

5. The tube container production device of claim 1, further comprising:
a tube container frame including a neck portion having the same radiuses of the top and the bottom; a shoulder portion of which a radius of the bottom is larger than a radius of the top and the top is connected to the bottom of the neck portion; and a body portion of which the top is connected with the bottom of the shoulder portion,
wherein the tube container frame includes at least one fixing groove for fixing the cap from the lower surface of the shoulder portion to the inner portion.

6. The tube container production device of claim 5, wherein the tube container frame includes at least one air inlet at the inside to be traversed from the top to the bottom.

7. A cap-integrated tube container, comprising:
a cap;
a hinge of which the top is connected to the bottom of the cap;
a neck portion of which the top is connected to the bottom of the hinge;
a shoulder portion of which the top is connected to the bottom of the neck portion; and
at least one fixing projection projecting downward from the side of the shoulder portion.

8. The tube container of claim 7, wherein the top of the cap is the same size as the bottom, the top of the neck portion is the same size as the bottom, and the bottom of the shoulder portion is larger than the bottom.

9. The tube container of claim 7, further comprising:
a body portion of which the top is connected to the bottom of the shoulder portion,
wherein the fixing projection is positioned in the body portion.t

10. The tube container of claim 7, further comprising:
a discharge part of which the bottom is connected to the top of the neck portion, the outside of the top protrudes, and the sealing member is coupled between the outside and the inside of the upper surface so that the outside of the sealing member is positioned.

11. A cap-integrated tube container production method, comprising:
mixing polyethylene and polypropylene polymerized by using either a metallocene catalyst or a ziegler-natta catalyst;
heating the mixture; generating a cap part by using the mixture melted by heating; and
bonding the cap part and the body portion.

12. The tube container production method of claim 11, wherein the mixing includes adding aluminum.

13. The tube container production method of claim 12, wherein the aluminum is added with 25 to 35 wt%.

14. The tube container production method of claim 12, wherein whether to add the aluminum is determined according to whether the aluminum is contained in the body portion.

15. The tube container production method of claim 11, wherein the mixing includes mixing 20 to 45 wt% of the metallocene polyethylene and 54 to 79 wt% of the polypropylene.

16. The tube container production method of claim 11, wherein the heating includes heating by a plurality of heating parts.

17. The tube container production method of claim 11, wherein in the plurality of heating parts, the temperature is increased from the heating part where the mixture is first heated to the heating part where the mixture is finally heated.

18. The tube container production method of claim 11, wherein the heating includes injecting at an injection speed of 55 to 60 rpm.

19. The tube container production method of claim 11, wherein the bonding includes heating and bonding aluminum contained in at least one of the cap part and the body portion by using high frequency electric energy.
